# EUROPEAN PATENT APPLICATION

(11) **EP 4 593 134 A1**
(43) Date of publication of application: **30.07.2025**
(21) Application number: 24211695.2
(22) Date of filing: 08.11.2024
(51) Int. Cl.: H01M 10/04, H01M 50/533, H01M 50/536, H01M 50/538, H01M 50/553, H01M 50/178, H01M 50/55, H01M 50/105

(54) **SECONDARY BATTERY**

(30) Priority: 26.01.2024 KR 20240012237
(71) Applicant: SAMSUNG SDI CO., LTD., Yongin-si, Gyeonggi-do 17084 (KR)
(72) Inventor: SEO, Ye Jin, 17084 Yongin-si (KR); LEE, Won Jin, 17084 Yongin-si (KR); KIM, Dong Hyun, 17084 Yongin-si (KR)
(74) Representative: Marks & Clerk LLP

(57) **Abstract**

The present disclosure relates to a secondary battery capable of increasing the inner space utilization rate of a case and improving energy density.

For example, disclosed is a secondary battery including: an electrode assembly including a current collector tab having a bent portion formed by bending at least once and having a protruding bent end portion; a case including a main body formed with an accommodation portion configured to accommodate the electrode assembly and a cover configured to cover the main body; and an electrode lead electrically connected to the end portion of the current collector tab and drawn out of the case, and further comprising an adhesive member formed to correspond to the bent portion.

## Description

### BACKGROUND

### 1. Field

The present disclosure relates to a secondary battery.

### 2. Description of the Related Art

A secondary battery is a battery which can be charged and discharged, unlike a primary battery which cannot be re-charged. Low-capacity secondary batteries are used in small portable electronic devices such as smartphones, feature phones, tablet computers, laptop computers, digital cameras, camcorders, and the like, and large-capacity secondary batteries are widely used as batteries for driving motors, driving power source and storing power in hybrid vehicles, electric vehicles, and the like.

These secondary batteries can include an electrode assembly composed of a negative electrode and a positive electrode, a case which accommodates the same, and a terminal connected to the electrode assembly. Secondary batteries can be classified into circular types, prismatic types, pouch types, and the like according to shapes thereof. The pouch-type secondary battery among the above can be easily transformed into various shapes, and can be formed with a pouch exterior material having a small weight.

The above-described information disclosed in the background technology of the present disclosure is only for improving understanding of the background of the present disclosure and may therefore include information that does not constitute the related art.

### SUMMARY

The present disclosure provides a secondary battery capable of improving a bent shape of an electrode lead and improving the inner space utilization rate of a case and energy density.

A secondary battery according to the present disclosure includes: an electrode assembly including a current collector tab having a bent portion formed by bending at least once and having a protruding bent end portion; a case including a main body formed with an accommodation portion configured to accommodate the electrode assembly and a cover configured to cover the main body; and an electrode lead electrically connected to the end portion of the current collector tab and drawn out of the case, and further including an adhesive member formed to correspond to the bent portion.

Here, the adhesive member may be formed on a bent inner surface of the bent portion.

Further, the adhesive member may fix a shape of the bent portion to the outside of the electrode assembly.

In addition, the adhesive member may be accommodated in a region which is concavely formed as the bent portion is bent.

In addition, the adhesive member may not be provided at the end portion where the current collector tab is coupled to the electrode lead.

In addition, the adhesive member may be formed to fill the inside of the bent portion and formed under the end portion of the current collector tab.

In addition, the adhesive member may be formed on both an inner surface and an outer surface of the bent portion of the current collector tab.

In addition, the adhesive member may adhere between the bent portion of the current collector tab and an outer surface of the electrode assembly.

In addition, the adhesive member may include an ultraviolet (UV) adhesive.

In addition, the adhesive member may include an acrylate-based UV adhesive.

In addition, a method of manufacturing a secondary battery according to the present disclosure includes: providing an electrode assembly including a current collector tab having a bent portion formed by bending at least once and having a protruding bent end portion; electrically connecting an electrode lead to the end portion of the current collector tab; injecting an adhesive member formed to correspond to the bent portion; and curing the adhesive member.

Here, the adhesive member may be injected onto a bent inner surface of the bent portion through an injection nozzle.

Further, the current collector tab having the bent portion may be dipped into a container provided with the adhesive member, and the adhesive member may be formed to correspond to the bent portion.

In addition, the method of manufacturing the secondary battery may further include pressing, by a pusher, the bent portion, into which the adhesive member is injected, to bring a shape of the bent portion into close contact with the electrode assembly.

In addition, the adhesive member may be configured as an UV adhesive, and the adhesive member may be cured by light irradiation through a lamp.

In addition, a pressing end portion of the pusher may be convexly or concavely formed.

At least some of the above and other features of the invention are set out in the claims.

### BRIEF DESCRIPTION OF DRAWINGS

FIG. 1 is a perspective view illustrating a secondary battery according to one embodiment of the present disclosure.
FIGS. 2A to 2J are views illustrating a process of manufacturing the secondary battery according to one embodiment of the present disclosure.
FIGS. 3A to 3D are views illustrating a process of manufacturing a secondary battery according to another embodiment of the present disclosure.
FIGS. 4A and 4B are photographs for comparing a shape of the secondary battery according to one embodiment of the present disclosure with a conventional structure.

### DETAILED DESCRIPTION

Hereinafter, preferred embodiments of the present disclosure will be described in detail with reference to the accompanying drawings. Prior to this, the terms and words used in the present specification and claims should not be construed as being limited to their usual or dictionary meanings and should be interpreted as meanings and concepts consistent with the proposed technical idea of the present disclosure based on the principle that the inventor may appropriately define the concept of terms to describe his/her invention in the best way. Accordingly, since the embodiments disclosed in the present specification and configurations shown in the drawings are only some of the most preferred embodiments of the present disclosure and do not represent the entire technical idea of the present disclosure, it should be understood that there are various equivalents and modifications which may replace them at the time of filing the present application. Further, when used in the present specification, "comprise or include" and/or "comprising or including" specify the presence of mentioned shapes, numbers, steps, operations, members, and/or groups thereof and do not exclude the presence or addition of one or more other shapes, numbers, steps, operations, members, and/or groups thereof. Further, when the embodiments of the present disclosure are described, "may do" and/or "may be" may include "one or more embodiments of the present disclosure."

Further, in order to help understanding of the invention, the accompanying drawings are not drawn to actual scale and the sizes of some components may be exaggerated. In addition, the same reference numerals may be given to the same components in different embodiments.

Stating that two objects for comparison are 'the same' means that that the two objects are 'substantially the same.' Accordingly, 'substantially the same' may include a deviation considered to be a low level in the art, for example, a deviation within 5%. Further, uniformity of a parameter in a certain area may mean uniformity from an average perspective.

Although first, second, and the like are used to describe various components, these components are not limited by these terms. These terms are only used to distinguish one component from another component, and a first component may also be a second component unless otherwise stated.

Throughout the specification, unless otherwise stated, each component may be singular or plural.

Disposition of an arbitrary component at "an upper portion (or a lower portion)" of a component or "on (or under)" the component means that the arbitrary component may be disposed in contact with an upper surface (or a lower surface) of the component or another component may be interposed between the component and the arbitrary component disposed on (or under) the component.

Further, when it is described that a certain component is "connected," "coupled," or "linked" to another component, it should be understood that the components may be directly connected or linked to each other, but still another component may be "interposed" between the components, or the components may be "connected," "coupled," or "linked" through still another component. In addition, a case in which a certain part is electrically connected to another part includes not only a case in which the parts are directly connected, but also a case in which the parts are connected with another element therebetween.

Throughout the specification, "A and/or B" refers to A, B, or A and B unless otherwise stated. That is, "and/or" includes all or any combination of a plurality of listed items. "C to D" means greater than or equal to C and less than or equal to D unless otherwise specified.

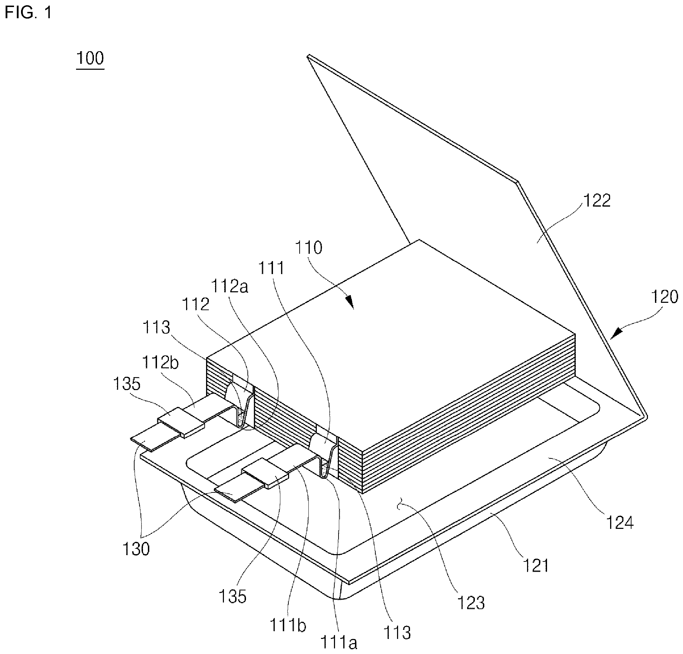

FIG. 1 is a perspective view illustrating a secondary battery according to an embodiment of the present disclosure.

Referring to FIG. 1, a secondary battery 100 according to the embodiment of the present disclosure includes an electrode assembly 110, a case 120, and an electrode lead 130.

The electrode assembly 110 may include a first electrode plate, a second electrode plate, and a separator. Here, the first electrode plate may operate as a negative electrode, and the second electrode plate may operate as a positive electrode.

The first electrode plate is formed by applying a first electrode active material, such as graphite or carbon, to a first electrode current collector formed of a metal foil such as a copper or nickel foil and includes a first electrode uncoated portion which is a region where the first active material is not applied. The first electrode uncoated portion provides a path for current flow between the first electrode plate and the outside.

The second electrode plate is formed by applying a second electrode active material such as a transition metal oxide or the like to a second electrode current collector formed of a metal foil such as an aluminium foil and includes a second electrode uncoated portion which is a region where the second active material is not applied.

Further, the first electrode uncoated portion may form a first current collector tab 111. A plurality of first current collector tabs 111 are provided and are formed to protrude from the first electrode plate. The first current collector tabs 111 may be formed to protrude from the first electrode plate in a certain direction and overlap at one side.

Further, the second electrode uncoated portion may form a second current collector tab 112. A plurality of second current collector tabs 112 are provided and are formed to protrude from the second electrode plate. The second current collector tabs 112 may be formed to protrude from the second electrode plate in a certain direction and overlap at one side. The second current collector tab 112 and the first current collector tab 111 may protrude in the same direction, and may be located to be spaced apart from each other.

Meanwhile, the first current collector tab 111 and the second current collector tab 112 may respectively include bent portions 111a and 112a, and as will be described below, adhesive members 113 are formed in the bent portions 111a and 112a. Accordingly, the bent form of the first current collector tab 111 and the second current collector tab 112 may be maintained, and the inner space utilization rate of the case and energy density may be improved.

Further, the first current collector tab 111 and the second current collector tab 112 may respectively include end portions 111b and 112b where a plurality of protruding uncoated portions gather. These end portions 111b and 112b may be welded through a method such as ultrasonic welding or the like so that the uncoated portions forming the first current collector tab 111 and the second current collector tab 112 are joined together without being scattered. Further, electrode leads 130 may be respectively coupled to the end portions 111b and 112b and protrude to the outside of the case 120.

The separator is located between the first electrode plate and the second electrode plate to serve to prevent a short circuit and enable the movement of lithium ions. The separator may be composed of polyethylene, polypropylene, or a composite film of polyethylene and polypropylene. In some examples, the separator may have a larger area than the first electrode plate and the second electrode plate to effectively prevent an electrical short circuit between the first electrode plate and the second electrode plate.

Further, the electrode assembly 110 may be substantially accommodated in the case 120 together with an electrolyte. The electrolyte may be composed of an organic solvent such as ethylene carbonate (EC), propylene carbonate (PC), diethyl carbonate (DEC), ethyl methyl carbonate (EMC), or dimethyl carbonate (DMC) and a lithium salt such as LiPF₆ or LiBF₄. Further, the electrolyte may have a liquid, solid, or gel form. In addition, each of the first current collector tab 111 and the second current collector tab 112 may be electrically connected to the electrode lead 130.

This electrode assembly 110 may be configured as a so-called stack type or lamination type as the first electrode plate, the separator, the second electrode plate, and the separator, and the like are sequentially stacked multiple times.

The case 120 may be generally composed of a main body 121 and a cover 122 which are formed as an integrally formed rectangular pouch film is folded in a longitudinal direction of one side. In this case, the case 120 may not be an integrated type and may be separate pouch films in which the folded portions of the main body 121 and the cover 122 are separated. In some examples, the case 120 may include or be referred to as a pouch-type case or an exterior material. In some examples, the case 120 may be a multilayer thin film composed of a metal layer and insulating layers formed on both sides of the metal layer.

The main body 121 may include an accommodation portion 123 which is a groove which accommodates the electrode assembly 110. Further, the main body 121 may include a sealing portion 124 extending outward along an edge of the accommodation portion 123. The case 120 may be sealed by seating the electrode assembly 110 in the accommodation portion 123, and then heat-fusing the edges of the sealing portion 124 and the cover 122 in a state of close contact. The sealing portion 124 is a portion where the main body 121 and the cover 122 are fused to each other and may flatly extend a certain length.

The electrode leads 130 may be electrically connected to the first current collector tab 111 and the second current collector tab 112, respectively. In some examples, the electrode lead 130 connected to the first current collector tab 111 may be a negative lead, and the electrode lead 130 connected to the second current collector tab 112 may be a positive lead. In some examples, the electrode lead 130 may include or be referred to as a lead tab, an electrode terminal, or a strip terminal.

The electrode leads 130 may be electrically connected to the end portions 111b and 112b of the first and second current collector tabs 111 and 112, respectively, and drawn out of the case 120. In some examples, the electrode leads 130 may be electrically connected to the first current collector tab 111 and the second current collector tab 112 through welding. In some examples, the electrode leads 130 may be drawn out through a gap between the sealing portion 124 of the main body 121 and the cover 122. For example, one end of the electrode lead 130 may be connected to the first current collector tab 111 or the second current collector tab 112, and the other end of the electrode lead 130 may be drawn out of the case 120. In some examples, the other end of the electrode lead 130 drawn out to the outside may be referred to as a drawn-out portion.

Further, the electrode lead 130 may further include an insulating member 135 surrounding the electrode lead 130. The insulating member 135 may serve to prevent an electrical short circuit between the electrode lead 130 and the case 120. In some examples, the insulating member 135 may prevent an electrical short circuit between the metal layer of the case 120 and the electrode lead 130. The insulating member 135 may be located between the sealing portion 124 of the main body 121 and the cover 122. In some examples, the insulating member 135 may be heat-fused together with the sealing portion 124 and the cover 122 when the sealing portion 124 and the cover 122 are heat-fused.

In some examples, the first current collector tab 111 and the second current collector tab 112 to which the electrode leads 130 are connected may be bent and accommodated in the accommodation portion 123.

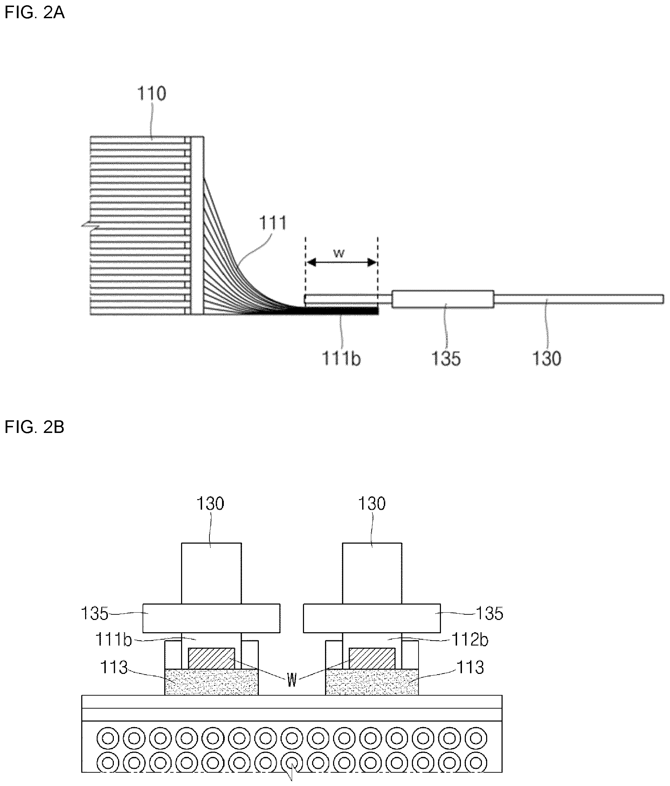

FIGS. 2A to 2J are views illustrating a process of manufacturing the secondary battery according to one embodiment of the present disclosure.

In the present disclosure, since a coupling relationship between each of the first and second current collector tabs 111 and 112 and the electrode lead 130 is the same, the following description will focus on the coupling relationship between the first current collector tab 111 and the electrode lead 130. Accordingly, the descriptions for the first current collector tab 111 may be applied equally to the second current collector tab 112.

First, referring to FIG. 2A, the first current collector tab 111 may be welded with the electrode lead 130 at the end portion 111b. Here, the end portion 111b of the first current collector tab 111 and the electrode lead 130 may overlap to form a welding area W, and welding may be performed in the welding area W through a method such as laser welding or the like. Further, the insulating member 135 may be formed in a region where the electrode lead 130 will be in contact with the sealing portion 124 of the case 120.

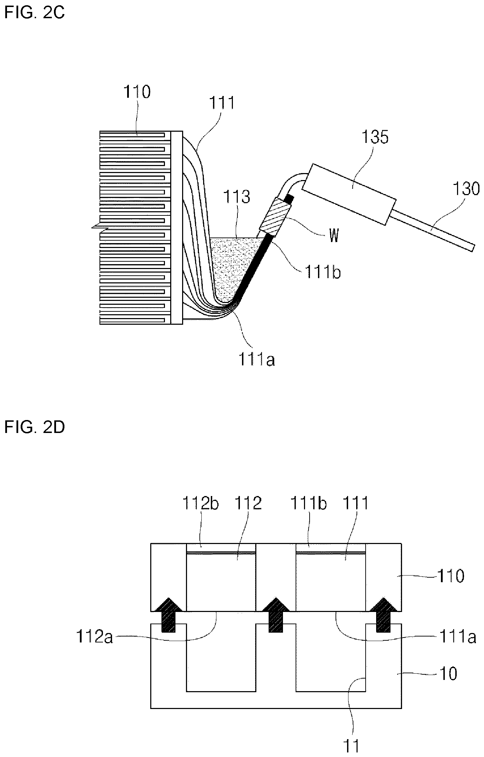

Thereafter, referring to FIGS. 2B and 2C, the first current collector tab 111 may bent at the bent portion 111a to have a concave shape, and the adhesive member 113 may be formed in the bent portion 111a. Specifically, as shown in FIG. 2C, the bent portion 111a may form a downwardly concave bent surface so that the first current collector tab 111 at the uppermost end is located at the innermost side, and the adhesive member 113 be applied to the inside of the bent surface. This adhesive member 113 may maintain a bent shape of the bent portion 111a of the first current collector tab 111 in a bent state. Further, the adhesive member 113 may be composed of an ultraviolet (UV) adhesive, for example, an acrylate-based UV adhesive, and then adhesive strength is increased by UV irradiation and thus the shape may be maintained.

A process of manufacturing this adhesive member 113 is sequentially shown in FIGS 2D to 2F.

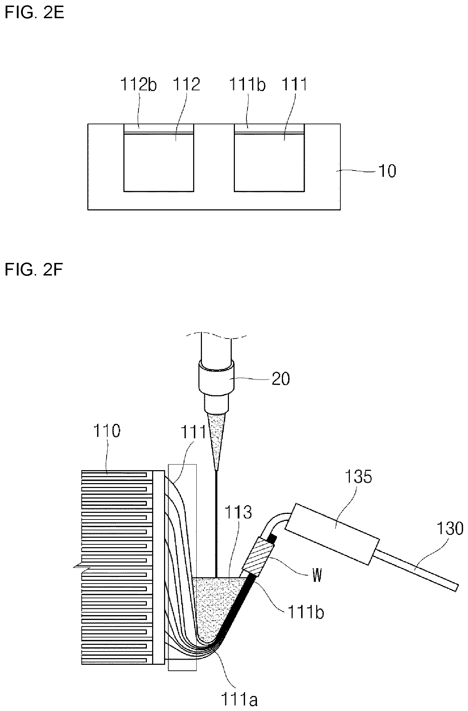

Referring to FIG. 2D, in a state in which the first current collector tab 111 is bent, a guide 10 having a groove 11 therein may rise as shown by an arrow and may be coupled to the electrode assembly 110. Further, as shown in FIG. 2E, the first current collector tab 111 is in a state of being located in the groove 11 of the guide 10, and the first current collector tab 111 may be temporarily maintained in a bent state. In addition, a region bent in a first direction in which the first current collector tab 111 protrudes from the electrode assembly 110 is divided through a roughly 'U'-shaped bent shape of the first current collector tab 111, and a region bent in a second direction perpendicular to the first direction may also be divided by the guide 10. Accordingly, the bent shape of the first current collector tab 111 is not deformed, and a bent portion 111a having a concave space may be formed in the bent portion.

Subsequently, referring to FIG. 2F, the adhesive member 113 may be injected into the bent interior of the first current collector tab 111 through an injection nozzle 20. In this case, the UV adhesive to be injected may be an acrylate-based UV adhesive, and the viscosity may be 20,000 to 30,000 cPs (based on 25 °C). The adhesive member 113 may be formed up to a lower end of the welding area W where the first current collector tab 111 is welded, and accordingly, a problem in that a base material tab is lifted in the welding area W of the first current collector tab 111 may be prevented. As a result of this injection of the adhesive member 113, a process of the same operation as shown in FIG. 2C may be performed.

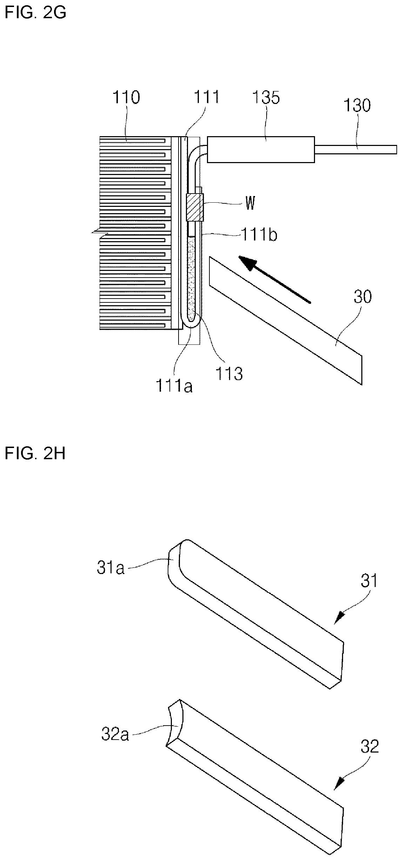

Subsequently, referring to FIG. 2G, since a pusher 30 moves forward and presses the bent portion 111a of the first current collector tab 111, the shape of the bent portion 111a may be deformed to be flatter. In this case, the pusher 30 to be used may be configured to have a flat end, but as shown in FIG. 2H, an end 31a of a pusher 31 may be convexly formed, or an end 32a of a pusher 32 may be concavely formed. In this case, when the end 31a of the pusher 31 is convexly formed, the bent portion 111a of the first current collector tab 111 may be concavely formed. Further, when the end 32a of the pusher 32 is concavely formed, the bent portion 111a of the first current collector tab 111 may be convexly formed. Since a partial region of the bent portion 111a is pressed relatively less through the shape of the bent portion 111a which is convexly or concavely formed, a space where the adhesive member 113 may accumulate may be further provided. Accordingly, the adhesive member 113 may be located in the bent portion 111a without flowing to the outside of the first current collector tab 111.

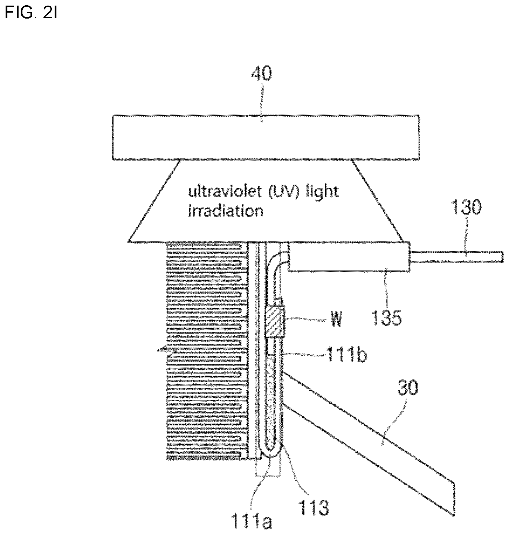

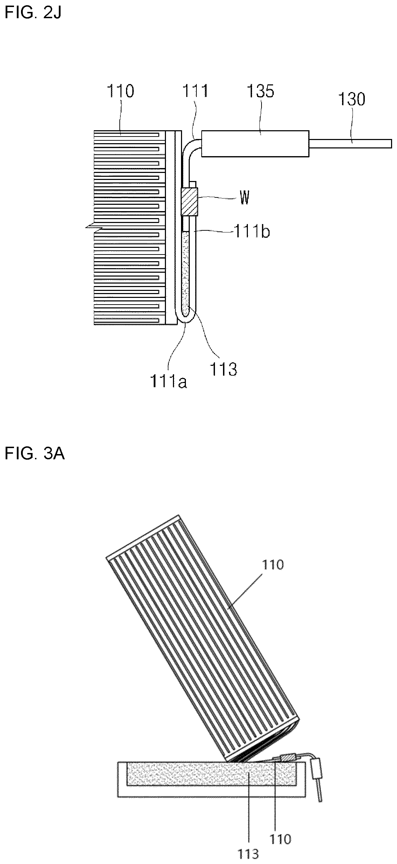

Further, referring to FIG. 2I, the adhesive member 113 may be cured by irradiating light to the bent portion 111a of the first current collector tab 111 through a lamp 40. Accordingly, the bent inner surfaces of the bent portion 111a may be fixed by the adhesive member 113 in a state of facing each other. Further, when the curing of the adhesive member 113 is completed, as shown in FIG. 2J, finally, the electrode assembly 110 may be provided in a form in which the bent portion 111a of the first current collector tab 111 is bent and fixed.

Accordingly, the final electrode assembly 110 may increase a space utilization rate for an upper portion where the bent portion 111a of the first current collector tab 111 is located, and prevent the first current collector tab 111 from sagging or lifting after being bent.

Hereinafter, a process of manufacturing a secondary battery according to another embodiment of the present disclosure will be described.

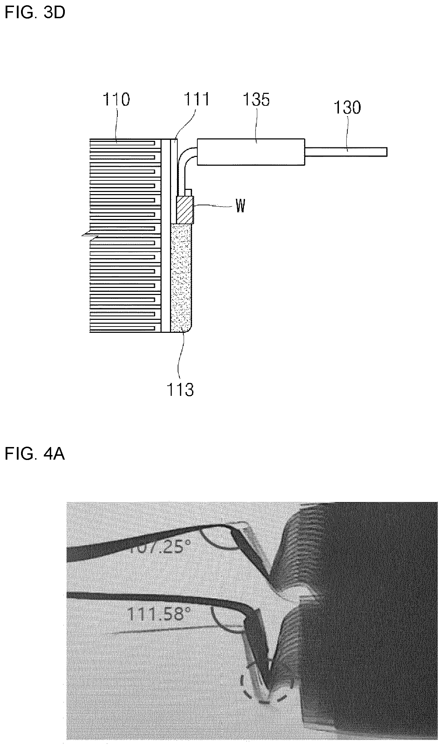

FIGS. 3A to 3D are views illustrating the process of manufacturing the secondary battery according to another embodiment of the present disclosure.

Referring to FIG. 3A, in the process of manufacturing the secondary battery according to another embodiment of the present disclosure, an electrode assembly 110 may be dipped into a container in which an adhesive member 113 is contained in a state in which a bent portion 111a of a first current collector tab 111 is temporarily bent and coupled to a guide 10. That is, the adhesive member 113 may not be injected through an injection nozzle, and the adhesive member 113 may be located not only around the bent portion 111a but also in a space of the bent portion 111a through a process in which the bent portion 111a is dipped into the adhesive member 113.

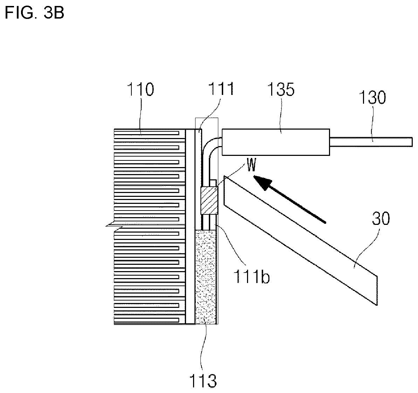

Subsequently, referring to FIG. 3B, since the bent portion 111a of the first current collector tab 111 may be pressed by a pusher 30, the bent portion 111a may be compressed. In this case, the adhesive member 113 may be located in the inner space of the bent portion 111a and pressed, and the adhesive member 113 may be configured to surround the outside of the bent portion 111a.

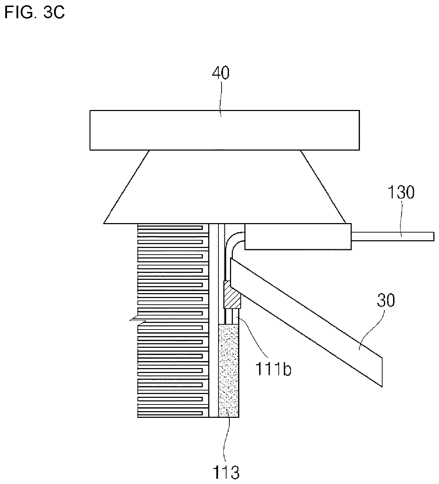

Further, referring to FIG. 3C, thereafter, the adhesive member 113 may be cured through a lamp 40. The cured adhesive member 113 may also fix the bent portion 111a of the first current collector tab 111 in a bent state.

Accordingly, the final electrode assembly 110 manufactured by the manufacturing method according to another embodiment of the present disclosure may also increase a space utilization rate for an upper portion where the bent portion 111a of the first current collector tab 111 is located, and prevent the first current collector tab 111 from sagging or lifting after being bent.

Hereinafter, improved effects of the secondary battery according to one embodiment of the present disclosure will be additionally described.

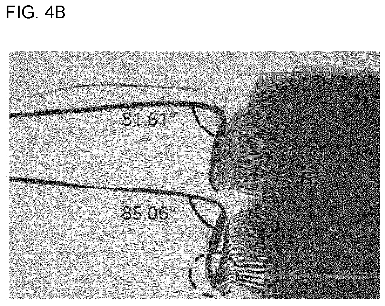

FIGS. 4A and 4B are photographs for comparing a shape of the secondary battery according to one embodiment of the present disclosure with a conventional structure.

First, referring to FIG. 4A, in the case of the electrode assembly in which the adhesive member is not formed in the bent portion, it can be seen that the first current collector tab is opened to 107.25° or 111.58°. That is, as shown in FIG. 4A, a problem in that a shape of the bent portion is deformed, and thus the first current collector tab sags may occur, and it can be seen that an utilization rate of an upper portion of the electrode assembly is reduced as the bent shape of the first current collector tab is opened.

On the other hand, referring to FIG. 4B, in the case of the secondary battery according to one embodiment of the present disclosure, it can be seen that the first current collector tab is opened to 81.61° or 85.06°. Accordingly, when comparing the structure in FIG. 4B with FIG. 4A, it can be seen that the first current collector tab is maintained in a bent state. Finally, as described above, the structure of the secondary battery according to one embodiment of the present disclosure may prevent the first current collector tab 111 from sagging or lifting, and increase the utilization rate of the upper portion of the electrode assembly 110.

A secondary battery according to an embodiment of the present disclosure can increase a space utilization rate of an electrode assembly for an upper portion where a bent portion of a current collector tab is located, and prevent the current collector tab from sagging or lifting after being bent by fixing a gap of a bent portion using an adhesive member in a state in which the current collector tab is bent.

What has been described above is only one embodiment for implementing the secondary battery according to the present disclosure, and the present disclosure is not limited to the above-described embodiment, and as claimed in the following claims, the technical idea of the present disclosure will be considered to the extent that various modifications can be made by anyone skilled in the art without departing from the gist of the present disclosure.

## Claims

1. A secondary battery comprising:
an electrode assembly including a current collector tab having a bent portion formed by bending at least once and having a protruding bent end portion;
a case including a main body formed with an accommodation portion configured to accommodate the electrode assembly and a cover configured to cover the main body; and
an electrode lead electrically connected to the end portion of the current collector tab and drawn out of the case, and
further comprising an adhesive member formed to correspond to the bent portion.

2. The secondary battery of claim 1, wherein the adhesive member is formed on a bent inner surface of the bent portion.

3. The secondary battery of claim 1 or claim 2, wherein the adhesive member fixes a shape of the bent portion to the outside of the electrode assembly.

4. The secondary battery of any one of claims 1 to 3, wherein the adhesive member is accommodated in a region which is concavely formed as the bent portion is bent.

5. The secondary battery of any one of claims 1 to 4, wherein the adhesive member is not provided at the end portion where the current collector tab is coupled to the electrode lead.

6. The secondary battery of claim 5, wherein the adhesive member is formed to fill the inside of the bent portion and is formed under the end portion of the current collector tab.

7. The secondary battery of claim 1, wherein the adhesive member is formed on both an inner surface and an outer surface of the bent portion of the current collector tab, optionally wherein the adhesive member adheres between the bent portion of the current collector tab and an outer surface of the electrode assembly.

8. The secondary battery of any one of claims 1 to 7, wherein the adhesive member includes an ultraviolet (UV) adhesive.

9. The secondary battery of any one of claims 1 to 8, wherein the adhesive member includes an acrylate-based UV adhesive.

10. A method of manufacturing a secondary battery, comprising:
providing an electrode assembly including a current collector tab having a bent portion formed by bending at least once and having a protruding bent end portion;
electrically connecting an electrode lead to the end portion of the current collector tab;
injecting an adhesive member formed to correspond to the bent portion; and
curing the adhesive member.

11. The method of claim 10, wherein the adhesive member is injected onto a bent inner surface of the bent portion through an injection nozzle.

12. The method of claim 10, wherein the current collector tab having the bent portion is dipped into a container provided with the adhesive member, and the adhesive member is injected to correspond to the bent portion.

13. The method of any one of claims 10 to 12, further comprising pressing, by a pusher, the bent portion, into which the adhesive member is injected, to bring a shape of the bent portion into close contact with the electrode assembly.

14. The method of any one of claims 10 to 13, wherein:
the adhesive member is configured as an UV adhesive; and
the adhesive member is cured by light irradiation through a lamp.

15. The method of claim 13 or claim 14, wherein a pressing end portion of the pusher is convexly or concavely formed.
